# EUROPEAN PATENT APPLICATION

(11) **EP 4 585 771 A1**
(43) Date of publication of application: **16.07.2025**
(21) Application number: 25151159.8
(22) Date of filing: 10.01.2025
(51) Int. Cl.: E04H 4/00, B29C 33/00, B29C 33/42, B29C 70/00

(54) **MOULD AND METHOD FOR MANUFACTURING A SWIMMING POOL OR SWIMMING POND OR THE LIKE**

(30) Priority: 15.01.2024 BE 202405019
(71) Applicant: Impoolse BV, 3500 Hasselt (BE)
(72) Inventor: Grigorkin, Oleksandr, 3800 SINT-TRUIDEN (BE)
(74) Representative: Bureau M.F.J. Bockstael NV

(57) **Abstract**

Method for manufacturing a preformed swimming pool or swimming pond or the like, characterised in that the method at least comprises the steps of providing a mould (1) and providing said mould on the convex side with a first plastic layer (6) which is supplied in powder form and heated and applied on the convex side of the mould (1).

## Description

The present invention relates to a mould and a method for manufacturing a swimming pool or swimming pond or the like, further in this document often indicated as swimming pool in short.

There are several methods for manufacturing a swimming pool. On the one hand, one distinguishes the swimming pools built on site and, on the other hand, the preformed swimming pools.

Preformed swimming pools are usually manufactured in a forming mould. The inside or the concave side of the mould hereby substantially shows the form of the outside of the preformed swimming pool as it will be offered.

The production process starts with a design for the swimming pool.

Specifications are laid down in said process, such as the dimensions, form, depth and any extra features such as stairs or built-in lighting.

A forming mould is subsequently made based on the design using materials such as fibreglass, steel or concrete. The inside of the mould has a form and dimensions which substantially correspond with the eventual swimming pool.

The inside of the mould is coated with a watertight material, often in different layers and often also with reinforcements. This material can be fibreglass reinforced polyester, for example, but different types of suitable material exist with associated reinforcements.

The inside of such known preformed swimming pool is usually executed smoothly as a result of the production method.

Indeed, in the techniques usually used to coat the inside of the mould, and particularly the last layer, a thin layer of the polymers is sprayed on the surface after which the polymers cure by polymerisation. This results in a smooth inner surface of a regular preformed swimming pool.

After the coating and any reinforcements are applied, the assembly is left to cure. The time required for this may vary, depending on the material that is used.

After curing, the swimming pool is removed from the mould and the finishing takes place. This may include, inter alia, connections for water circulation, the application of tiles or a coating for the outside of the swimming pool.

The finished swimming pool is subsequently transported to the desired location and installed. The swimming pool is hereby placed on a foundation and the required connections for water circulation and any other functions are connected.

The exact production process may vary, depending on the type of swimming pool and the materials used.

A disadvantage of preformed swimming pools thus obtained is that the visible surface of the swimming pool, when in use, more specifically the inside of the tub, is executed in a smooth way.

This characteristic is usually not seen as a disadvantage.

It is often said that a smooth inside prevents swimmers from hurting themselves on rough surfaces.

It is also said that a smooth inside is easier to clean and maintain. It is also often reasoned that dirt and bacteria are less likely to attach to a smooth surface, such that the swimming pool is easier to keep clean.

And finally, it is also said that a smooth inside gives the swimming pool a nice and professional look. It ensures a sleek and seamless surface, such that the swimming pool looks attractive.

In short, a smooth inside of a preformed swimming pool offers safety, hygiene, comfort and aesthetic advantages according to current general opinion.

However, the present invention is based on the insight that a smooth inside of a swimming pool also shows disadvantages, and that a textured surface is preferred over a smooth surface.

Indeed, the problem with a smooth surface is that the smallest damage, such as a scratch and the like, becomes visible immediately.

Also, any repairs are easily visible in view of the contrast with the smooth surface around the repair, especially when the repair is textured.

The purpose of the present invention is to provide an alternative method for manufacturing a preformed swimming pool.

To this end, the invention relates to a method for manufacturing a preformed swimming pool or swimming pond or the like, said method at least comprising the steps of providing a mould and providing said mould on the convex side with a first plastic layer supplied in powder form which is heated and applied on the convex side of the mould, whereby the first plastic layer supplied in powder form which is heated and applied concerns a modified polyolefin, whereby in a next step a first epoxy layer and first fibreglass layer are provided on the first plastic layer, and whereby prior to applying the first plastic layer, the mould is provided with a layer of wax or other mould release agent with a view to easily removing the half-finished swimming pool from the mould.

The advantage is that the first plastic layer provided on the mould, optionally after applying a wax or other mould release agent, which, will be the visible layer of the swimming pool when in use. In this way, the side of the swimming pool that is visible when in use, can be provided with a texture according to choice. A texture causes minor scratches or repairs to be less visible.

Note that the outside or the convex side of the mould substantially shows the form and texture of the form and texture respectively which is intended for the inside of the preformed swimming pool, obtained by applying the method according to the invention.

An advantage of the use of such modified polyolefin consists in that it offers significantly more flexibility or elasticity after curing than, for example, a commonly applied gel coating, such that the risk of tearing or formation of so-called "spiders" is significantly lowered.

In an optional next step the first plastic layer or first polymer layer is provided with an epoxy layer, polyester layer or vinylester layer, on which fibreglass is provided.

After polymerisation of the epoxy the next layers of fibreglass can be applied with epoxy, polyester or vinylester.

After polymerisation the thus obtained product is removed from the mould for finishing and installation on site.

A significant advantage, as already mentioned, is that any damage can be repaired by the local application of a plastic layer supplied in powder form which is heated and applied on the area to be repaired.

Such repair will barely be visually noticeable as the same technique can be used for the repair as for the method for manufacturing a swimming pool or the like according to the invention.

Small scratches on the ready-made product are easy to repair by sanding the damaged area and heating the coating, after which the scratches are no longer visible.

These advantages apply even more if the convex side of the mould is provided with the same texture or surface structure as the one that is automatically formed when applying heated plastic in powder form as applied for the repair.

Said structure is characterised by an average roughness value Ra from 0.8 to 4 pm, or more preferably 0.9 to 2.4 um, and even more preferably 1.1 to 1.6 µm, whereby 1.2 µm results in a particularly favourable average roughness value.

Indeed, according to a preferred embodiment variant the outside of the mould is provided with a texture that results in a texture on the inside of the swimming pool that corresponds with the texture as obtained when applying heated plastic in powder form as applied for the repair.

The invention also relates to a mould, the surface of which is provided with a texture on the convex side which corresponds with the texture as obtained when applying heated plastic in powder form as applied for the repair.

With the intention of better showing the characteristics of the invention, a preferred application of the method for manufacturing a swimming pool or swimming pond or the like according to the invention with associated mould according to the invention is described hereinafter, by way of an example without any limiting nature, with reference to the accompanying drawings wherein:
figure 1 shows a cross-section of a mould according to the invention, with indication of the first steps of the method according to the invention;
figures 2 and 3 show the next steps of the method according to the invention;
figure 4 shows a preformed swimming pool obtained by applying the method as illustrated in figures 1 to 3.

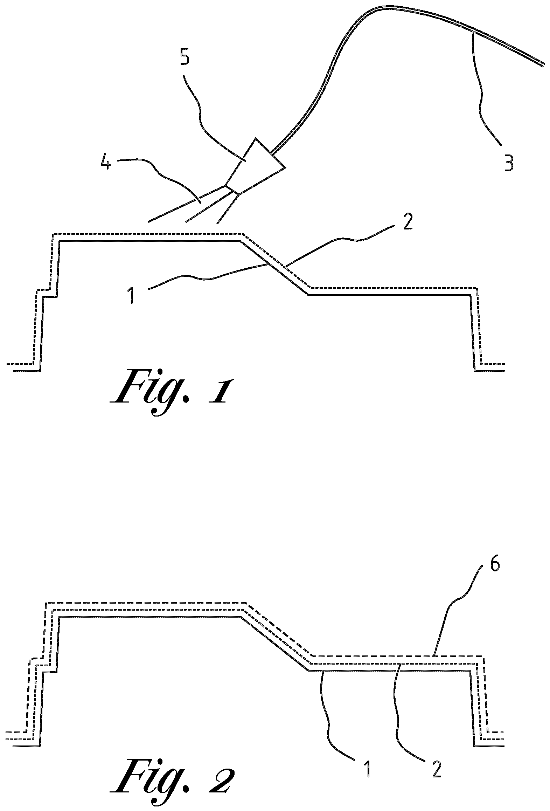

Figure 1 shows a mould 1 with the convex side facing upward and provided with a texture T_m on said side.

A layer of wax 2 as mould release agent is provided on this upwardly facing convex side.

Schematically, a supply pipe 3 is shown for the supply of plastic in powder form 4, which is heated in and/or on the level of an also schematically shown spray nozzle 5 and applied on the convex side of the mould 1.

Thus a first plastic layer 6 or first polymer layer 6 is provided, in this case a modified polyolefin, as shown in figure 2.

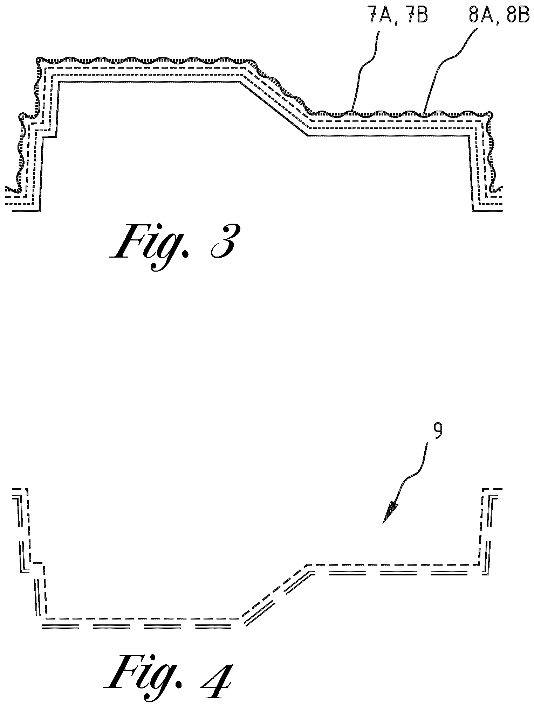

In a next step, shown in figure 3, the first plastic layer 6 or first polymer layer 6 is provided with a first epoxy layer 7A on which a first fibreglass layer 8A is provided.

After polymerisation of the first epoxy layer 7A, a second epoxy layer 7B and a second fibreglass layer 8B are applied in this application. Obviously, several of said structural layers can be provided, and for each of the epoxy layers alternatively polyester or vinylester can be applied for example.

After polymerisation, the thus obtained product 9, in this case the preformed swimming pool 9, is removed from the mould 1 for further finishing and installation on the site.

It is understood that the preformed swimming pool 9 is installed, for example in an excavated pit, with the concave side facing upward, such that the visible side is the first plastic layer 6 when in use.

The advantage is that the first plastic layer 6 which is provided on the mould 1 will be the visible layer of the swimming pool when in use. Said first plastic layer 6 shows a substantially corresponding texture T_p on the free surface as the texture T_m provided on the convex side of the mould 1.

The texture T_p causes minor scratches or repairs to be less visible.

In this special embodiment variant as shown in the figures, the texture T_m is determined such that the texture T_p which is obtained on the visible inside of the swimming pool 9 corresponds with the texture T_r as obtained on the free surface by applying repairs by the local application of a plastic layer supplied in powder form which is heated and applied on the area to be repaired. Such repair will barely be visually noticeable.

For the sake of clarity:
- T_m stands for structure of the mould 1 on the convex side;
- T_p stands for the product, in this case the swimming pool 9, on the concave side or inside;
- T_r stands for structure as obtained on the free surface when a plastic layer in powder form is heated and applied, such as for example when carrying out a repair to a swimming pool.

It is understood that the specific choice for said structure T_p is optional.

The present invention is by no means limited to the embodiment of the mould and applied method for manufacturing a swimming pool or swimming pond or the like described by way of example and illustrated with reference to the figures but can also be realised in other ways without departing from the scope of the invention

## Claims

1. Method for manufacturing a preformed swimming pool or swimming pond or the like, whereby the method at least comprises the steps of providing a mould (1) and providing said mould on the convex side with a first plastic layer (6) supplied in powder form which is heated and applied on the convex side of the mould (1), **characterised in that** the first plastic layer (6) supplied in powder form which is heated and applied concerns a modified polyolefin, whereby in a next step (6) a first epoxy layer (7A) and first fibreglass layer (8A) are provided on the first plastic layer, and whereby prior to applying the first plastic layer (6), the mould (1) is provided with a layer of wax (2) or other mould release agent with a view to easily removing the half-finished swimming pool (9) from the mould (1).

2. Method according to claim 1, **characterised in that** in a next step a second epoxy layer (7B) and second fibreglass layer (8B) are provided on the first epoxy layer (7A) and first fibreglass layer (8A).

3. Method according to claim 1 or 2, **characterised in that** for one or more of the epoxy layers, instead of epoxy, polyester or vinylester is applied.

4. Method according to one or more previous claims, **characterised in that** after polymerisation, the thus obtained product (9), for example the preformed swimming pool or swimming pond (9), is removed from the mould (1) for any further finishing and installation on site.

5. Mould (1) for application of the method according to one or more of the previous claims, **characterised in that** the convex side of the mould (1) contains a texture.

6. Mould according to claim 5, **characterised in that** the convex side of the mould (1) contains a texture (T_m) which substantially corresponds with the texture (T_r) which is obtained on the free surface when a plastic layer in powder form is heated and applied, such as for example when carrying out a repair to a swimming pool.

7. Mould according to claim 6, **characterised in that** the convex side of the mould (1) contains a texture (T_m) which is such that the substantially corresponding texture (T_p) which is obtained on the visible or concave inside of the swimming pool or swimming pond (9) substantially corresponds with the texture (T_r) that is obtained on the free surface when a plastic layer in powder form is heated and applied, such as for example when carrying out a repair to a swimming pool.

8. Mould according to claim 5, 6 or 7, **characterised in that** the convex side of the mould (1) contains a texture (T_m) which is **characterised by** an average roughness value Ra from 0.8 to 4 µm.

9. Mould according to claim 8 **characterised in that** the convex side of the mould (1) contains a texture (T_m) which is **characterised by** an average roughness value Ra from 0.9 to 2.4 µm.

10. Mould according to claim 9 **characterised in that** the convex side of the mould (1) contains a texture (T_m) which is **characterised by** an average roughness value Ra from 1.1 to 1.6 µm.

11. Mould according to claim 10 **characterised in that** the convex side of the mould (1) contains a texture (T_m) which is **characterised by** an average roughness value Ra of 1.2 µm.
